# DEMANDE DE BREVET EUROPEEN

(11) **EP 0 848 014 A2**
(43) Date de publication de la demande: **17.06.1998**
(21) Numéro de dépôt: 97403032.2
(22) Date de dépôt: 12.12.1997
(51) Int. Cl.: C08B 30/04, C08B 30/02

(54) **Procédé de production d'amidon de mais**

(30) Priorité: 13.12.1996 FR 9615364
(71) Demandeur: Costimex S.A., 67000 Strasbourg (FR)
(72) Inventeur: Foult, Didier, 67500 Haguenau (FR); Baret, Jean-Luc, Alain, Guy, 77250 Veneux les Sablons (FR); Gros, Jean-Pierre, 67000 Strasbourg (FR)
(74) Mandataire: Colas, Jean-Pierre

(57) **Abrégé**

L'invention concerne notamment un procédé de production d'amidon, caractérisé en ce qu'il comprend les étapes suivantes :
a) trempage de semoule de maïs dans de l'eau additionnée d'anhydride sulfureux, puis séparation de la plus grande part du milieu aqueux résultant,
b) broyage en présence d'eau de la matière solide résiduelle provenant de l'étape (a) afin de produire une suspension aqueuse de particules d'amidon et de gluten relativement fines et d'enveloppes cellulosiques relativement grosses,
c) séparation desdites enveloppes à partir de la suspension obtenue en (b) afin d'obtenir une suspension aqueuse de particules d'amidon et de gluten, et
d) séparation de l'amidon et du gluten, et séchage de l'amidon.

Utilisation par l'industrie de l'amidon.

## Description

L'invention concerne un nouveau procédé de production d'amidon de maïs.

Dans la production industrielle classique d'amidon à partir du maïs, ce dernier, dès sa réception, est nettoyé et débarrassé de ses impuretés. Il subit ensuite la série d'opérations typiques suivantes en suspension dans l'eau.

### a) Trempage du grain

Cette opération a pour but de faire gonfler les grains et de les ramollir, afin de faciliter par la suite la séparation des granules d'amidon du réseau protéique qui les entoure, ainsi que des produits solubles.

Le trempage est réalisé dans des batteries de grandes cuves pendant 30 à 48 heures (suivant le type de maïs utilisé), à une température de 50 à 52°C, dans de l'eau contenant de l'anhydride sulfureux. Au cours de cette opération se produit une fermentation qui transforme les sucres réducteurs en acide lactique. Les eaux de trempage circulent d'une cuve à l'autre, de la plus anciennement chargée à la plus récente, en sens inverse des mises en trempe, afin de les charger au maximum de toutes les particules solubles (sucres, sels minéraux, protéines et acide lactique). Elles sont alors soutirées, puis concentrées par évaporation sous vide. Ainsi traitées les eaux de trempage servent à la fabrication d'antibiotiques et, dans la mesure où ce débouché ne couvre pas toutes les fabrications, elles sont mélangées aux drèches, c'est-à-dire aux éléments cellulosiques livrés à l'alimentation du bétail. Lorsqu'elles sont vendues séparément, elles portent dans le commerce le nom américain de corn steep".

### b) Dégermage

Le grain, ramolli par le trempage, subit un broyage grossier qui le fait éclater en libérant le germe sans le briser. Puis il passe dans des batteries d'hydrocyclones où les germes, plus légers, sont séparés des autres constituants du grain.

Les germes sont lavés, séchés, puis pressés pour en extraire l'huile brute ; le tourteau résiduel est destiné à l'alimentation animale. L'huile brute est utilisée en fonderie, en savonnerie et en pharmacie, mais elle est surtout vendue à des raffineries qui la purifient pour l'alimentation humaine.

### c) Broyages - Tamisages

La suspension qui reste après extraction des solubles et des germes et qui comprend l'amidon, les protéines et les fibres cellulosiques, est très finement écrasée par des broyeurs à "attrition" (il s'agit de disques cannelés tournant en sens inverse) ou à "impact" (ce sont des rotors tournant à grande vitesse et projetant le produit contre des "impacteurs" placés sur le rotor et le stator de la machine). Ce traitement permet une "libération" quasi totale de l'amidon.

La mixture subit ensuite deux tamisages : le premier sépare les enveloppes les plus grosses, le second les fines particules. Le enveloppes une fois lavées puis séchées sont appelées "drèches". Mélangées avec les solubles concentrés obtenus précédemment, elles sont alors baptisées du nom américain de "corn gluten feed" et utilisées en alimentation animale.

### d) Séparation de l'amidon et du gluten

Il ne reste plus en suspension que l'amidon et la protéine de maïs appelée gluten. On sépare ces deux éléments par centrifugation, l'amidon étant le plus lourd.

Le gluten est concentré puis séché ; il peut être utilisé directement en alimentation animale ou dans diverses industries après des traitements complémentaires. C'est le gluten qui contient les pigments jaunes du maïs.

La suspension d'amidon, couramment appelée "lait" à cause de son aspect et de sa couleur blanche, est ensuite totalement épurée par passage sur une batterie d'hydrocyclones. On obtient ainsi un lait d'amidon pratiquement pur contenant au maximum 0,3% de protéines. Il est soit séché en l'état, soit transformé par voie chimique, soit hydrolysé en glucoserie.

L'amidon séché obtenu par le procédé ci-dessus est un produit de bonne qualité, mais qui est obtenu avec un rendement net moyen (60-65%/matières sèches) qu'il est souhaitable d'améliorer. Par ailleurs, l'amidon obtenu se présente sous formes de particules relativement grosses (40% ou plus des particules ont une taille supérieure à 20 *µ*m) et il existe un besoin, notamment dans l'industrie alimentaire, pour de l'amidon plus finement divisé.

Afin de remédier à ces défauts du procédé de production d'amidon actuellement pratiqué, la Demanderesse a entrepris des recherches qui ont abouti à la présente invention.

L'invention est basée sur la découverte qu'on peut obtenir un meilleur rendement net en amidon et un amidon plus fin si l'on soumet à l'étape de trempage de la semoule de maïs à la place des grains de maïs normalement utilisés.

Plus précisément, l'invention concerne un procédé de production d'amidon, caractérisé en ce qu'il comprend les étapes suivantes :
a) trempage de semoule de maïs dans de l'eau acidifiée, puis séparation de la plus grande part du milieu aqueux résultant,
b) broyage en présence d'eau de la matière solide résiduelle provenant de l'étape (a) afin de produire une suspension aqueuse de particules d'amidon et de gluten relativement fines et d'enveloppes cellulosiques relativement grosses,
c) séparation desdites enveloppes à partir de la suspension obtenue en (b) afin d'obtenir une suspension aqueuse de particules d'amidon et de gluten, et
d) séparation de l'amidon et du gluten, et séchage de l'amidon.

Avantageusement, l'étape de trempage (a) est effectuée en présence d'au moins une enzyme carbohydrase choisie parmi les arabanases, cellulases, bêta-glucanases, hémicellulases, xylanases, et pectinases. Les enzymes précitées facilitent la séparation ultérieure de l'amidon et du gluten. Pour une efficacité maximale, on utilisera très avantageusement un mélange de plusieurs types de carbohydrases. A titre indicatif, on peut utiliser de 0,1 à 5 litres/tonne d'enzymes par rapport au poids à sec de semoule, (dans le cas du complexe multienzymatique Viscozyme^{®} 120L vendu par la Société NOVO-NORDISK A/S).

Dans le cas d'autres enzymes, l'homme du métier n'éprouvera aucune difficultés à déterminer une quantité d'enzymes satisfaisante par quelques essais de routine.

L'invention concerne également un amidon de qualité améliorée, pouvant être produit par le procédé de l'invention, caractérisé en ce qu'au moins 75% des particules d'amidon ont une taille inférieure à 20 *µ*m et au moins 96% desdites particules ont une taille inférieure à 100 *µ*m, et en ce qu'il présente une valeur de rétrogradation d'au moins 1800 unités Brabender (en abrégé ci-après "UB").

L'unité Brabender est l'unité de mesure employée dans le visco-amidographe Brabender, commercialisé par la Société Brabender, Allemagne.

La matière de départ utilisée dans le procédé de l'invention peut être toute semoule de maïs. Typiquement, les semoules de maïs sont préparées par nettoyage des grains de maïs ; mouillage des grains avec 4-5% d'eau en vue de faire gonfler le germe ce qui facilite ensuite la séparation du germe et de l'endosperme ; dégermage, par exemple par traitement des grains dans un appareil centrifuge qui fait éclater les grains et sépare les germes et les endospermes; broyage des endospermes obtenus, par exemple par passage entre deux cylindres cannelés rotatifs, et séparation des co-produits (c'est-à-dire les farines, les germes et les sons) par exemple par tamisage, sassage et blutage ; et séchage de ces co-produits, en particulier de la semoule de maïs, par exemple par contact avec des tubes à travers lesquels circule de la vapeur d'eau. La semoule de maïs a une granulométrie de 0,3 à 2,5 mm. Elle a typiquement une teneur en humidité de 10-15% en poids et une teneur en matières sèches de 85-90% en poids, mais ces teneurs n'ont rien de critique eu égard à l'invention. Les matières sèches comprennent typiquement en poids 85-87% d'amidon, 8-10% de protéines, moins de 1% de matière cellulosiques, et moins de 2% de matières grasses, ainsi que des matières minérales représentant moins de 1% (exprimées en cendres).

Le trempage (a) de la semoule est effectué dans de l'eau additionnée d'une petite proportion d'anhydride sulfureux, par exemple 0,1-0,3% en poids de SO₂. Le trempage peut durer de 6h à 36h par exemple et est avantageusement effectué sous agitation non-agressive. Le but du trempage est de dissoudre les substances solubles contenues dans la semoule et de ramollir cette dernière afin de faciliter son broyage ultérieur. En fin de trempage, on sépare le milieu aqueux, du moins en grande partie, des particules solides résiduelles gonflées d'eau (hydratées) résultante (teneur typique en humidité de l'ordre de 40-45%).

Le broyage (b) est un broyage fin, effectué sur les particules solides gonflées en présence d'eau, par exemple sous circulation d'eau, qui a pour effet de produire une suspension aqueuse contenant des particules relativement fines d'amidon et de gluten (protéines du maïs) et des morceaux relativement gros d'enveloppes cellulosiques. Par exemple, le broyage peut être conduit de manière que les particules d'amidon et de gluten soient broyées à une grosseur de particules inférieure à 50 *µ*m environ, et que les morceaux d'enveloppes cellulosiques se présentent sous une grosseur nettement supérieure, par exemple de 300 *µ*m ou plus. Le broyage (b) peut être réalisé avec l'appareillage utilisé en amidonnerie classique, par exemple dans un broyeur à attrition ou à impact, parcouru par une circulation d'eau.

L'effluent provenant du broyage (b) est une suspension aqueuse de particules relativement fines d'amidon et de gluten et de morceaux relativement gros d'enveloppes cellulosiques que l'on soumet à une séparation (c) visant à séparer les morceaux d'enveloppe. Ceci peut se faire, par exemple, par tamisage avec un tamis d'ouverture de mailles appropriée pour retenir les morceaux d'enveloppes. La matière retenue sur le tamis sera appelée ci-après "drèches".

A la sortie de l'étape de séparation (c), on obtient donc une suspension aqueuse de fines particules d'amidon et de gluten.

Si nécessaire, la suspension aqueuse obtenue peut être soumise à une opération facultative de concentration visant à faciliter l'étape de séparation (d).

L'étape de séparation (d) vise à séparer l'amidon du gluten. L'amidon étant plus dense (d = 1,5) que le gluten (d = 1,3) cette séparation peut être effectuée par centrifugation, comme on le pratique actuellement en amidonnerie classique. En variante, on peut avoir recours à un procédé de séparation par sédimentation, comme le procédé par tables de sédimentation anciennement utilisé en amidonnerie.

L'amidon séparé est finalement séché, de manière classique.

Le procédé de l'invention permet d'obtenir de l'amidon avec un rendement amélioré qui est typiquement de l'ordre de 80% sur la base du poids des matières sèches.

L'amidon obtenu par le procédé de l'invention se distingue de l'amidon produit classiquement notamment par une plus grande finesse. Typiquement, plus de 75% des particules d'amidon ont une taille inférieure à 20 µm et plus de 96% des particules d'amidon ont une taille inférieure à 100 µm.

Le Tableau 1 suivant qui donne des analyses granulométriques typiques d'un amidon classique et d'un amidon produit selon l'invention montre bien la plus grande finesse de ce dernier.

**TABLEAU 1**

| ANALYSE GRANULOMETRIOUE | Amidon classique | Amidon selon l'invention |
|---|---|---|
| < 5 µm | 8,01% | 11,24% |
| < 20 µm | 58,11% | 80,67% |
| < 40 µm | 88,83% | 95,36% |
| < 100 µm | 92,82% | 97,59% |

L'amidon produit selon l'invention présente également une valeur de rétrogradation plus élevée que l'amidon classique. L'amidon produit selon l'invention a typiquement une rétrogradation de l'ordre de 1800-1850 UB au lieu de 1600-1650 UB pour l'amidon classique.

La finesse de l'amidon de l'invention le rend particulièrement approprié pour l'utilisation comme adjuvant alimentaire.

L'exemple non limitatif suivant est donné dans le but d'illustrer l'invention.

### EXEMPLE : Cet exemple a été réalisé au laboratoire.

On a utilisé comme matière de départ de la semoule de maïs contenant 13,3% d'humidité et 86,8% de matières sèches et dont la composition analysée, en poids, sur la base des matières sèches, est de 85,5% d'amidon, 9,4% de protéines, 0,4% de cellulose et 0,9% de matières grasses. L'amidon a été dosé par une méthode polarimétrique, les protéines par la méthode de Kjeldahl, la cellulose par la méthode de Scharrer, et les matières grasses par la méthode CEE (J.O. CEE 18.1.1984, N° L15/29, Procédé A).

On a fait tremper pendant 24 heures 200 g de cette semoule de maïs dans environ 2 litres d'eau additionnée de 0,2% en poids d'anhydride sulfureux et maintenue à 50°C.

Au bout des 24h, après soutirage de l'eau, on a obtenu une semoule à 45% d'humidité.

Cette semoule humide a été finement broyée dans un broyeur à meules en corindon, sous circulation d'eau, puis on a tamisé la suspension aqueuse résultante d'abord sur un tamis ayant une ouverture de maille de 315 *µ*m pour retenir les morceaux d'enveloppes cellulosiques, puis sur un tamis ayant une ouverture de maille de 50 *µ*m pour effectuer une épuration fine. Les produits retenus constituent les "drèches".

On a obtenu ainsi environ 12 litres de suspension que l'on a concentré jusqu'à 7 litres environ dans une centrifugeuse de type écrémeuse.

La suspension concentrée obtenue a été ajustée à pH 4 (c'est-à-dire au voisinage du point isoélectrique des protéines afin de faciliter leur précipitation), puis on a procédé à la séparation de l'amidon et du gluten en faisant couler la suspension dans une gouttière inclinée en inox de 5,1 mètres de longueur et de 38 mm de largeur. Les particules d'amidon (plus denses) se sont déposées dans la partie haute de la gouttière, tandis que les particules de gluten (plus légères) se sont déposées plus bas, avec toutefois un certain chevauchement entre les deux zones de dépôt, les plus grosses particules de gluten sédimentant en même temps que les plus petites particules d'amidon. Aussi l'ensemble a été ensuite lavé avec de l'eau distillée afin d'améliorer la séparation des deux constituants en entraînant par l'eau le reste des particules de gluten "collées" sur l'amidon. L'amidon ainsi séparé a été séché in situ dans la gouttière pendant une nuit à l'aide d'un ruban chauffant, avant d'être recueilli et analysé.

Le Tableau 2 ci-dessous récapitule les résultats d'analyse et les compare à ceux d'un amidon classique.

**TABLEAU 2**

| | Amidon classique | Amidon selon l'invention |
|---|---|---|
| Humidité | 17,7% | 12,6% |
| % protéines/matière sèche | 0,71% | 0,61% |
| Température de début de gélatinisation | 75°C | 76°C |
| Viscosité maximum | 990 UB | 1080 UB |
| Stabilité à 95°C | 20 UB | 10 UB |
| Rétrogradation | 1640 UB | 1830 UB |

Outre une rétrogradation plus élevée que celle de l'amidon classique, l'amidon de l'invention présente une viscosité maximum plus forte.

Le Tableau 3 ci-après donne les quantités, en g pour 100 g de matières sèches de la semoule de départ, des divers constituants produits dans l'exemple, ainsi que leur composition, en % en poids sur la base des matières sèches.

**TABLEAU 3**

| Constituant | Matières sèches | Amidon | Protéines | Cellulose | MG* |
|---|---|---|---|---|---|
| Drèches | 2,9 | 21 | 43,8 | 9,9 | 1,3 |
| Gluten | 11 | - | 45 | - | - |
| Amidon | 81,1 | 99,4 | 0,6 | - | - |

| | | | | | |
|---|---|---|---|---|---|
| * MG = Matières grasses | | | | | |

Il est à noter que le flux de gluten sous-produit par le procédé de l'invention contient beaucoup plus de protéines que le flux de gluten produit dans le procédé classique de production de l'amidon (45% au lieu de 27%). C'est là un avantage supplémentaire du procédé de l'invention.

## Revendications

1. Procédé de production d'amidon, caractérisé en ce qu'il comprend les étapes suivantes :
a) trempage de semoule de maïs dans de l'eau additionnée d'anhydride sulfureux, puis séparation de la plus grande part du milieu aqueux résultant,
b) broyage en présence d'eau de la matière solide résiduelle provenant de l'étape (a) afin de produire une suspension aqueuse de particules d'amidon et de gluten relativement fines et d'enveloppes cellulosiques relativement grosses,
c) séparation desdites enveloppes à partir de la suspension obtenue en (b) afin d'obtenir une suspension aqueuse de particules d'amidon et de gluten, et
d) séparation de l'amidon et du gluten, et séchage de l'amidon.

2. Procédé selon la revendication 1, caractérisé en ce que la semoule a une granulométrie de 0,3 à 2,5 mm.

3. Procédé selon la revendication 1 ou 2, caractérisé en ce que le trempage est effectué pendant 6 à 36 heures.

4. Procédé selon l'une quelconque des revendications 1 à 3, caractérisé en ce que le trempage (a) est poursuivi jusqu'à ce que la semoule contienne de l'ordre de 40-45% d'eau d'hydratation.

5. Procédé selon l'une quelconque des revendications 1 à 4, caractérisé en ce que dans l'étape (b) , les particules d'amidon et de gluten sont réduites à une taille inférieure à 50 *µ*m.

6. Procédé selon l'une quelconque des revendications 1 à 5, caractérisé en ce que, après l'étape (c) on procède à une opération de concentration.

7. Procédé selon l'une quelconque des revendications 1 à 4, caractérisé en ce que le trempage (a) est effectué en présence d'au moins une enzyme carbohydrase choisie dans le groupe formé par les arabanases, cellulases, bêta-glucanases, hémicellulases, xylanases et pectinases.

8. Amidon de qualité améliorée, caractérisé en ce qu'au moins 75% des particules d'amidon ont une taille inférieure à 20 µm et au moins 96% desdites particules ont une taille inférieure à 100 µm, et en ce qu'il présente une valeur de rétrogradation d'au moins 1800 unités Brabender.
